(19) Europäisches Patentamt / European Patent Office / Office européen des brevets

(11) **EP 2 605 182 A2**

(12) **EUROPEAN PATENT APPLICATION**

(43) Date of publication:
**19.06.2013 Bulletin 2013/25**

(51) Int Cl.:
**G06K 9/00** (2006.01)  **G06K 9/62** (2006.01)

(21) Application number: **12195628.8**

(22) Date of filing: **05.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.12.2011 JP 2011270823**

(71) Applicant: **Hitachi Ltd.**
**Tokyo (JP)**

(72) Inventors:
• **Murakami, Takao**
**Tokyo, 100-8220 (JP)**
• **Takahashi, Kenta**
**Tokyo, 100-8220 (JP)**

(74) Representative: **Moore, Graeme Patrick et al**
**Mewburn Ellis LLP**
**33 Gutter Lane**
**London**
**EC2V 8AS (GB)**

(54) **High-security biometric authentication system**

(57)     By reducing both a WAP and an LAP to a certain value or lower, biometric authentication with high security is implemented. A template (222) and a query sample are generated from biometric data of a user and they are matched. There, a query sample-specific impostor distribution, to which a score of a query sample and a template (222) of an impostor follows, and a template-specific impostor distribution (223), to which a score of a template (222) and a query sample of an impostor follows, are estimated and user judgment is performed using one of them in which false accept is more difficult to occur.

FIG. 1

EP 2 605 182 A2

**Description**

BACKGROUND OF THE INVENTION

The present invention relates to a method and a system of biometric authentication for authenticating individuals using biometric features that human beings have.

Biometric authentication has been known as an authentication means having advantages of being more difficult to be counterfeited compared with authentication based on a password, an IC card, or the like and being never forgotten. In biometric authentication, biometric data are acquired from a user (hereafter, referred to as an enrollee) in enrollment to generate and to register information called features from them. These features for enrollment are called templates. In authentication, by matching features (hereafter, referred to as query samples) generated from biometric data acquired from a user (hereafter, referred to as a claimant) with the templates and by obtaining scores (similarities or distances), authentication is performed.

The features in biometric authentication can be classified into four kinds: features with which both false rejects and false accepts are rare, features which easily incur false rejects, query samples which incur false accepts for many templates, and templates which incur false accepts for many query samples. They are referred to as "Sheep", "Goat", "Wolf", and "Lamb", respectively. The "Goat" is a factor that reduces convenience, and the "Wolf" and the "Lamb" are factors that degrade security.

In authentication error rates in biometric authentication, there are two types as an FRR (False Reject Rate) and an FAR (False Accept Rate). The FRR is an error rate of judging a genuine person as an impostor by mistake, and the FAR is an error rate of judging an impostor as a genuine person by mistake. The FAR is represented by MATH. 1, provided that a set of all query samples is V, and a set of all templates is E:

(MATH. 1)

$$FAR = \underset{v \in V}{Ave}\ \underset{e \in E,\, e \neq v}{Ave}\ P\big(match(v, e) = accept\big)$$

Here, P(match(v, e) = accept) represents probability that an authentication result obtained by matching a query sample $v \in V$ with a template $e \in E$ is "accept", and

(MATH. 2)

$$\underset{v \in V}{Ave}\ X$$

represents an average value of X with respect to $v \in V$. In addition, $e \neq v$ represents that the template e and the query sample v are each presented from separate users. That is, the FAR is an average value of a probability value that false accept occurs for all query samples and all templates.

Further, as performance metrics of security against the "Wolf" and the "Lamb" in biometric authentication, a WAP (Wolf Attack Probability) and an LAP (Lamb Accept Probability) as shown below can be defined, respectively. WAP is an performance metric represented as

(MATH. 3)

$$WAP = \underset{v \in V}{Max}\ \underset{e \in E,\, e \neq v}{Ave}\ P\big(match(v, e) = accept\big)$$

,

where

(MATH. 4)

$$\underset{v \in V}{Max} \, X$$

is a maximum value of X with respect to $v \in V$ Namely, the WAP is a probability value of success when a claimant having a query sample most easily inducing false accept tries masquerade. The LAP is a performance metric represented as

(MATH. 5)

$$LAP = \underset{e \in E}{Max} \, \underset{v \in V, v \neq e}{Ave} \, P\left(match\left(v, e\right) = accept\right)$$

.

That is, the LAP is a probability value of success when a template which would most easily induce false accept is under masquerade attack.

Countermeasures for the "Wolf" or the "Lamb" have been proposed. For example, in "Secure Biometric Authentication against "Wolf Attack" based on Accidental Coincidence Probability", A. Monden, Symposium on Cryptography and Information Security in 2010 (SCIS 2010), an accidental coincidence probability method is proposed, where probability (accidental coincidence probability) ACP (v, e) that a degree of similarity equal to or higher than the degree of similarity of a query sample v and a template e is obtained when an arbitrary template x is selected from the set E of all templates after a query sample v is presented is calculated, and it is judged as a genuine person when this is smaller than a threshold and as an impostor when this is equal to or larger than the threshold.

SUMMARY OF THE INVENTION

The above-described accidental coincidence probability method enables to provide effect of enhanced security against a "Wolf". Specifically, in the above-described prior-art document, it is shown that the WAP can be suppressed to a certain value or lower by the accidental coincidence probability method. However, in the accidental coincidence probability method security against a "Lamb" can not be enhanced.

In addition, in the above-described prior-art document it is stated that the LAP can be suppressed to a certain value or lower by exchanging the set V of the query samples and the set E of the templates in the accidental coincidence probability method. However, because the relation between a "Wolf" and a "Lamb" is reversed in this case, security against a "Wolf" cannot be enhanced.

Accordingly, in the above-described prior-art document, there is a problem that both the WAP and the LAP cannot be suppressed to a certain value or lower.

In order to solve the above problem, the present invention adopts the following constitution. In enrollment of biometric data, the Kullback-Leibler distance between the genuine distribution and an impostor distribution of a template is determined and it is compared with a threshold. When it is greater than or equal to the threshold, it is judged as a "Lamb" and a different template is made to be enrolled. Further, in authentication, two log-likelihood ratios are determined using an impostor distribution of a query sample and the impostor distribution of the template, respectively, and a smaller one of them is compared with a threshold so that authentication is performed based on this comparison result. As authentication, when it exceeds the threshold, authentication is to be "accept"; otherwise, authentication is to be "reject" so that output is performed to input a different query sample.

As a more specific aspect, a biometric authentication system having the following constitution is adopted. It is provided with a biometric data input sensor which acquires biometric data from users; a template generation unit which generates a template from the biometric data; a query sample generation unit which generates a query sample from the biometric data; a matching unit which matches the query sample and the template with each other; a query sample-specific impostor distribution estimation unit which estimates a query sample-specific impostor distribution to which a score of the query sample and the template of an impostor follows; a template-specific impostor distribution estimation unit which estimates a template-specific impostor distribution to which a score of the template and the query sample of an impostor follows; and a user judgment unit which performs judgment of a user using one in which false accept is more difficult to occur between the query sample-specific impostor distribution and the template-specific impostor distribution. It should be noted that the present invention also includes a method to implement this and a device and a method which configure this system.

According to the present invention, user judgment is performed using one in which false accept is more difficult to occur between the query sample-specific impostor distribution and the template-specific impostor distribution. In this way, it becomes possible to suppress the WAP and the LAP to predetermined conditions such as a certain value or lower. As a result, an effect that high security as expected against a "Wolf" and a "Lamb" can be realized is obtained.

Other objects, features, and advantages of the invention will become apparent from the following description of the embodiments of the invention taken in conjunction with the accompanying drawings.

BRIEF DESCRIPTION OF THE DRAWINGS

Fig. 1 is a block diagram showing a functional configuration of a first embodiment of the present invention;
Fig. 2 is a block diagram showing a hardware configuration of the first embodiment of the present invention;
Fig. 3 is a flow chart showing an enrollment process of the first embodiment of the present invention;
Fig. 4 is a flow chart showing an authentication process of the first embodiment of the present invention;
Fig. 5 is a conceptual drawing of authentication of the first embodiment of the present invention; and
Fig. 6A and 6B are conceptual drawings of enrollment of the first embodiment of the present invention.

DESCRIPTION OF THE EMBODIMENTS

Hereinafter, explanation is given on one embodiment of the present invention with reference to drawings. A kind of biometric data may be anything such as fingerprints, faces, irises, veins, or the like. In addition, a query sample and a template may be the same or may be different.

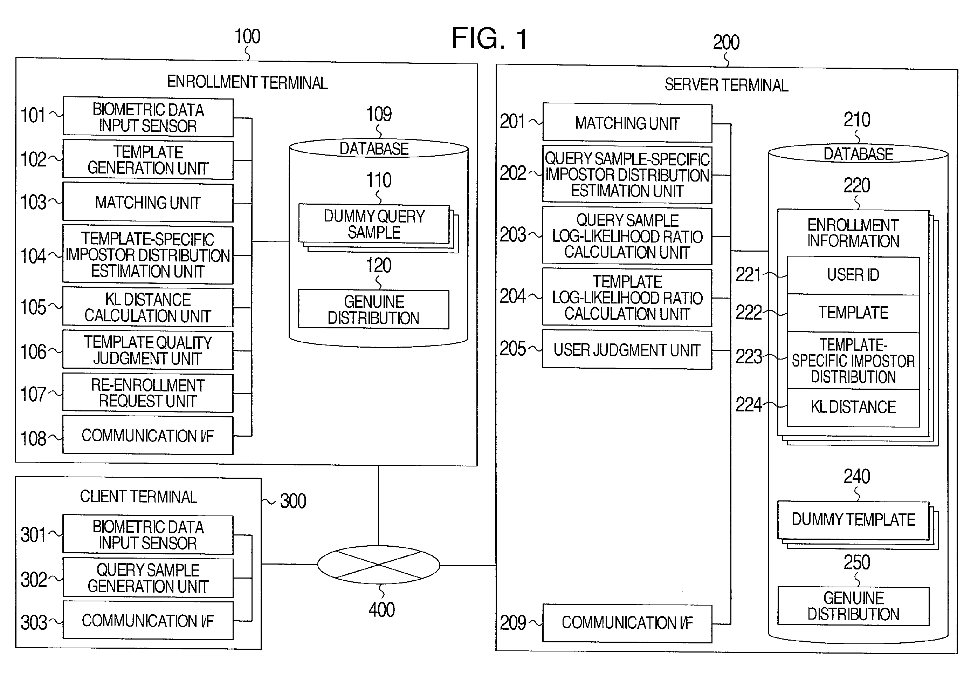

In Fig. 1, an example of a configuration of a biometric authentication system of the present embodiment is shown. This system comprises an enrollment terminal 100 for transmitting enrollment information including a template acquired from a user to a server terminal 200; the server terminal 200 for performing user judgment by matching a query sample sent from a client terminal in authentication with the template; a client terminal 300 for transmitting the query sample acquired from a user to the server terminal 200; and a network 400.

Each of the enrollment terminal 100, the server terminal 200, and the client terminal 300 may be a single installation, or pluralities of any of them may be present. Further, the enrollment terminal 100 may be the same terminal as the server terminal 200, or may be the same terminal as the client terminal 300. Furthermore, the server terminal 200 may be the same terminal as the client terminal 300. In addition, the server terminal 200 may hold a database 109 of the enrollment terminal 100, and it may be set for the server terminal 200 side to perform match with a dummy query sample 110 in enrollment, estimation of a template-specific impostor distribution, calculation of a KL distance, and judgment of quality of the template (from the step S104 to the step S107). The network 400 may use a network such as WAN or LAN, communication between devices using USB, IEEE1394, or the like, or wireless communication such as a mobile phone network or near field communication. For example, such configuration is conceivable that the enrollment terminal 100 is an intranet PC, the server terminal 200 is a single server in a data center operated by a company, the client terminal 300 is a PC of each employee, and the network 400 is an intra-network.

The enrollment terminal 100 comprises a biometric data input sensor 101 for acquiring biometric data; a template generation unit 102 for generating a template from biometric data; a matching unit 103 for matching a query sample and the template with each other; a template-specific impostor distribution estimation unit 104 for estimating a distribution (hereafter, a template-specific impostor distribution) to which a score of the query sample and the template of an impostor follows; a Kullback-Leibler distance (hereafter, a KL distance) calculation unit 105 for estimating a KL distance between a distribution to which a score of the query sample and the template of the genuine follows (hereafter, a genuine distribution) and the template-specific impostor distribution; a template quality judgment unit 106 for judging whether a template is a "Sheep" or not; a re-enrollment request unit 107 for requesting re-enrollment in the case where the template is not a "Sheep"; a communication I/F 108; and a database 109.

The database 109 holds M1 pieces of the dummy query samples 110 and the genuine distribution 120. As the dummy query samples 110, for example, a query sample which is set to be generated in addition to a template being generated in enrollment may be used, or a query sample which has been prepared in advance by the system may be used. Besides, in the case where the query sample and the template are the same, the same one as a dummy template 240 may also be used. As for the genuine distribution 120, there is a method for determining it, for example, using a plurality of the scores of the query sample and the template of the genuine which are obtained based on the query sample and the template prepared in advance by the system.

The server terminal 200 comprises a matching unit 201 for matching a query sample and a template with each other; a query sample-specific impostor distribution estimation unit 202 for estimating a distribution to which a score of the query sample and the template of an impostor follows (hereafter, a query sample-specific impostor distribution); a query sample log-likelihood ratio calculation unit 203 for determining a log-likelihood ratio using the query sample-specific impostor distribution; a template log-likelihood ratio calculation unit 204 for determining a log-likelihood ratio using a template-specific impostor distribution; a user judgment unit 205 for judging whether a claimant is genuine or not; a communication I/F 209; and a database 210.

The database 210 holds enrollment information 220 of each enrollee, M2 pieces of the dummy templates 240, and a genuine distribution 250. The enrollment information 220 comprises a user ID 221, a template 222, a template-specific impostor distribution 223, and a KL distance 224. As the dummy template 240, for example, the template 222 already enrolled may be used, or a template which has been prepared by a system in advance separately from the template 222 already enrolled may be used.

The client terminal 300 comprises a biometric data input sensor 301 for acquiring biometric data, an query sample generation unit 302 for generating an query sample from biometric data, and a communication I/F 303.

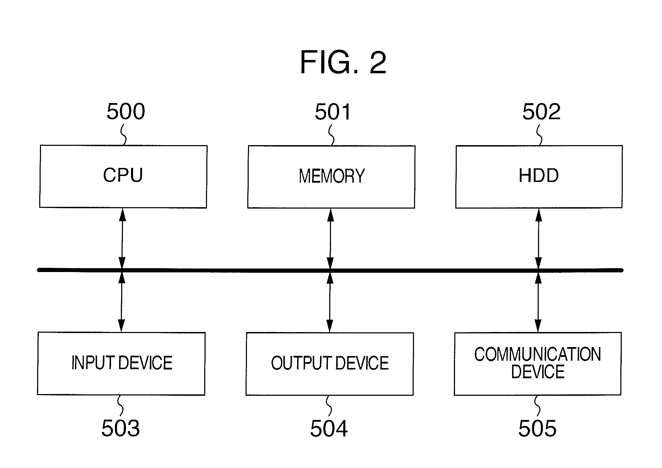

In Fig. 2, a hardware configuration of the enrollment terminal 100, the server terminal 200, and the client terminal 300 in the present embodiment is shown. These terminals, as shown in Fig. 2, can comprise a CPU 500, a memory 501, an HDD 502, an input device 503, an output device 504, and a communication device 505. Arithmetic operations of each terminal shown below are performed by the CPU 500 according to a program stored in the HDD 502. In other words, the operations of each part of Fig. 1 are performed as follows.

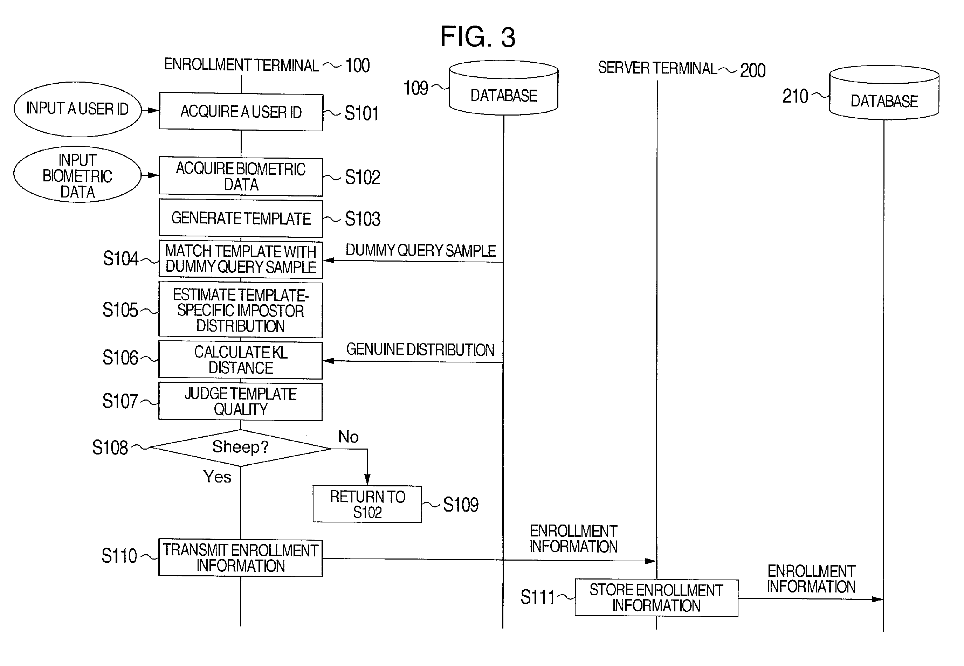

In Fig. 3, procedure of enrollment and a data flow in the present embodiment are shown.

The enrollment terminal 100 acquires a user ID from a user (step S101). For example, it can be performed by receiving input from an input device such as a keyboard or reading from a recording medium such as an IC card.

The enrollment terminal 100 acquires biometric data from a user (step S102). In the case where this step is performed for the second or subsequent time, it may be set so as to acquire a different kind of biometric data (or fingerprints or veins of a different finger) from the previous one or to acquire the same kind of biometric data (or fingerprints or veins of the same finger).

The enrollment terminal 100 generates a template from the acquired biometric data (step S103). This is attainable with publicly known technology such as performing by extracting a feature.

The enrollment terminal 100 matches M1 pieces of dummy query samples acquired from the database 109 with the template to determine M1 pieces of scores (step S104).

The enrollment terminal 100 estimates a template-specific impostor distribution $g_t()$ using the M1 pieces of scores (step S105). Specifically, $g_t()$ is estimated by the maximum likelihood estimation or the MAP estimation while assuming a model of a normal distribution, a beta-binomial distribution, or the like. Alternately, a template log-likelihood ratio $\log\{f()/g_t()\}$, which is a logarithmic to a ratio of the genuine distribution $f()$ described later and $g_t()$ may be estimated by the logistic regression instead of the template-specific impostor distribution $g_t()$.

The enrollment terminal 100 obtains the KL distance between the genuine distribution 120 $f()$ acquired from the database 109 and the template-specific impostor distribution $g_t()$ (step S106). The KL distance $D(f\|g_t)$ between the genuine distribution $f()$ and the template-specific impostor distribution $g_t()$ can be represented by (MATH. 6).

(MATH. 6)

$$D\left(f \parallel g_t\right) = \int f\left(s\right) \log \frac{f\left(s\right)}{g_t\left(s\right)} ds$$

This may be calculated using a histogram as the genuine distribution, or it may be estimated using a method described in Q. Wang, S. Kulkarni, and S. Verdu, "Divergence estimation for multidimensional densities via k-nearest-neighbor distances," IEEE International Symposium on Information Theory (ISIT2009), vol. 55, 2009.

The enrollment terminal 100 judges template quality by comparing the obtained KL distance with a threshold T (step S107). Specifically, it is judged as a high-quality template ("Sheep") when the KL distance is equal to or more than the threshold T while it is judged as a low-quality template ("Goat" or "Lamb") when it is less than the threshold T.

The enrollment terminal 100 proceeds to the step S110 when it is judged as "Sheep", and it proceeds to the step S109 otherwise (step S108).

The enrollment terminal 100 returns to the step S102 when it proceeds to the step S109 (step S109).

The enrollment terminal 100 transmits the enrollment information configured with the user ID, the template, the template-specific impostor distribution, and the KL distance to the server terminal 200 (step S110).

In response to it, the server terminal 200 receives the enrollment information and stores it in the database 210 (step S111).

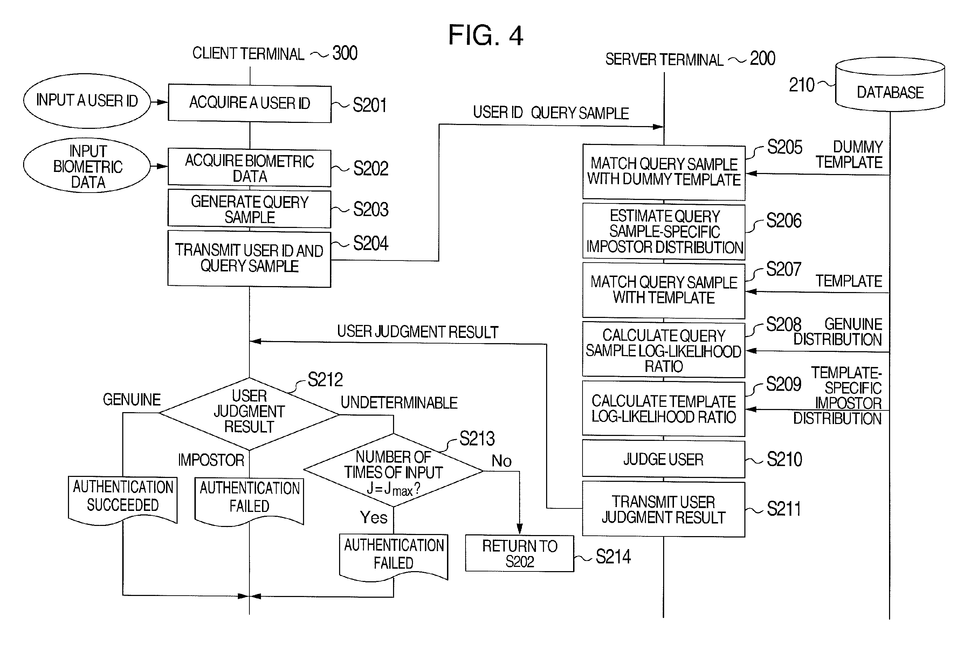

Explanation is given next on procedure of authentication and a data flow in the present embodiment with reference to Fig. 4.

The client terminal 300 acquires a user ID from a user who requests authentication (a claimant) (step S201). In addition, the client terminal 300 acquires biometric data from the user (step S202).

The client terminal 300 generates a query sample from acquired biometric data (step S203).

The client terminal 300 transmits the acquired user ID and the generated query sample to the server terminal 200 (step S204).

The server terminal 200 receives the user ID and the query sample which are transmitted, matches the received query sample with the M2 pieces of dummy templates acquired from the database 210 corresponding to the received user ID, and determines M2 pieces of scores (step S205).

The server terminal 200 estimates a query sample-specific impostor distribution $g_q()$ using the determined M2 pieces of the scores (step S206). The estimation method is the same as the estimation method for the template-specific impostor distribution $g_t()$.

The server terminal 200 matches the received query sample with a template 222 linked to the received user ID and determines a score $s_{J0}$ (step S207).

The server terminal 200 determines a query sample log-likelihood ratio $\log\{f(s_{J0})/g_q(s_{J0})\}$ using the score $s_{J0}$ determined in the step S207, the genuine distribution 250 $f()$, and the query sample-specific impostor distribution $g_q()$ (step S208). When the query sample log-likelihood ratio $\log\{f()/g_q()\}$ was estimated using the logistic regression in the step S206, the genuine distribution 250 $f()$ is not required.

The server terminal 200 determines a template log-likelihood ratio $\log\{f(s_{J0})/g_t(s_{J0})\}$ using the score $s_{J0}$ determined in the step S207, the genuine distribution 250 $f()$, and a template-specific impostor distribution 223 $g_t()$ linked to the received user ID (step S209).

The server terminal 200 performs judgment on whether the claimant is genuine or not using the query sample log-likelihood ratio $\log\{f(s_{J0})/g_q(s_{J0})\}$ and the template log-likelihood ratio $\log\{f(s_{J0})/g_t(s_{J0})\}$ (step S210). Specifically, a smaller one of $\log\{f(s_{J0})/g_q(s_{J0})\}$ and $\log\{f(s_{J0})/g_t(s_{J0})\}$ is added to $L_{min}(J)$. Here, $L_{min}(J)$ is a sum of log-likelihood ratios after J times of input of biometric data ($L_{min}(0)=0$). Namely, it is represented by (MATH. 7).

$$L_{min}(J) = L_{min}(J-1) + \min[\log\{f(s_{J0})/g_q(s_{J0})\}, \log\{f(s_{J0})/g_t(s_{J0})\}] \ldots (MATH.\ 7).$$

Subsequently, $L_{min}(J)$ is compared with two thresholds of a threshold A and a threshold B (A>B) and it is judged as being "genuine" when it is greater than the threshold A, as being an "impostor" when it is less than the threshold B, and as "undeterminable" when it is neither of them.

The server terminal 200 transmits a user judgment result (genuine/impostor/undeterminable) to the client terminal 300 (step S211).

The client terminal 300 judges as "authentication successful" when the user judgment result is genuine, judges as "authentication failed" when it is an impostor, and proceeds to the step S213 when it is undeterminable (step S212).

The client terminal 300 judges as "authentication failed" when the number of times of input of biometric data J by the claimant has reached $J_{max}$, and otherwise proceeds to the step S214 (step S213). The client terminal 300 proceeds to the step S202 when it proceeds to the step S214 (step S214).

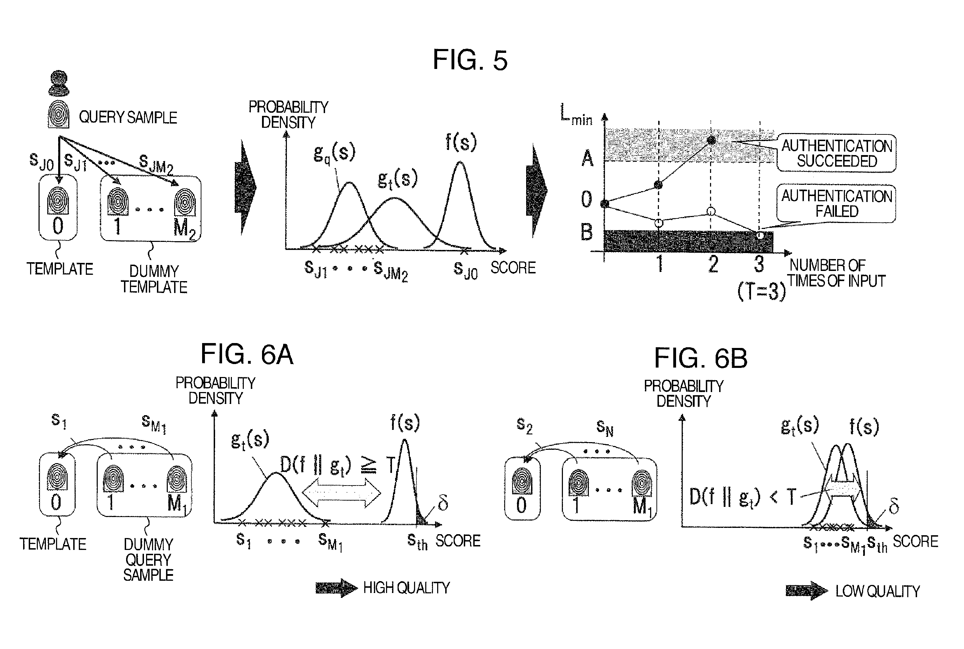

In Fig. 5, a conceptual drawing of authentication of the present embodiment is shown. Here, transitions of $L_{min}(J)$ are shown for the two cases of "authentication successful" and "authentication failed".

In this way, in the present embodiment, a sum of log-likelihood ratios is taken as a criterion for judgment. As is described in K. Takahashi, M. Mimura, Y Isobe, and Y Seto, "A Secure and User-Friendly Multi-Modal Biometric System," Proc. SPIE, vol. 5404, pp. 12-19, 2004, when a genuine distribution or an impostor distribution is properly estimated here, the relational expression shown in (MATH. 8) holds between the FAR and A:

$$FAR \leq 1/e^A \quad \ldots (MATH.\ 8).$$

Therefore, as long as a query sample-specific impostor distribution $g_q()$ is used as an impostor distribution, the FAR can be suppressed to $1/e^A$ or lower whatever query sample is input. Since this also holds even in the case where a query sample which tends to induce false accept most is input, the WAP can be suppressed to $1/e^A$ Or lower. Also, as long as a template-specific impostor distribution $g_t()$ is used as an impostor distribution, the FAR can be suppressed to $1/e^A$ or lower whatever template is enrolled. Since this also holds even in the case where a template which tends to induce false accept most is enrolled, the LAP can be suppressed to $1/e^A$ or lower. In the present embodiment, between log-likelihood ratios determined using a query sample-specific impostor distribution $g_q()$ and a template-specific impostor distribution $g_t()$, respectively, a smaller one (namely, the one which is more difficult to induce false accept) is adopted.

By performing user judgment using the one with which false tends to incur less like this, both the WAP and the LAP can be suppressed to a certain value ($1/e^A$) or lower. As a result, an effect that high security as expected against a "Wolf" and a "Lamb" can be implemented is obtained.

In Figs. 6A and 6B, conceptual drawings of enrollment of the present embodiment are shown. Here, two cases are shown: a case judged as a high-quality template (a "Sheep") and a case judged as a low-quality template (a "Lamb" or a "Goat").

In this way, in the present embodiment, the KL distance is taken as a criterion for judgment of template quality. In authentication process of the present embodiment, by using a query sample-specific impostor distribution and a template-specific impostor distribution, high security against a "Wolf" and a "Lamb" can be realized. However, if it is as it is, authentication is difficult to be successful for a "Lamb" even when any query samples are input and, therefore, a user himself who enrolled the "Lamb" is difficult to succeed in authentication. Namely, it raises a problem that the "Lamb" becomes a "Goat". To this problem, a measure can be taken in the present embodiment by estimating a template-specific impostor distribution to detect a "Lamb" in advance and having re-enrolled in enrollment. Specifically, as described in A. Wald, "Sequential Analysis," John Wiley and Sons, New York, 1947, there is a relation of (MATH. 9) between an expected value E(J') of the number of times of input J' of biometric data required in authentication by the genuine and the threshold A when it is set as the threshold B = -∞ (when it is set for the log-likelihood ratio never to become smaller than the threshold B):

$$E\,(J') \approx A/E(\log\{f(s)/g_t(s)\})$$
$$= A/D(f\|g_t) \qquad \dots \text{(MATH. 9)}.$$

Here, because $D(f\|g_t) \geq T$, (MATH. 9) becomes (MATH. 10).

$$E(J') \leq A/T \qquad \dots \text{(MATH. 10)}.$$

That is, for the template which can be enrolled in the present embodiment, the average number of times of input for the genuine can be suppressed to A/T. Therefore, a problem that the "Lamb" becomes a "Goat" can be prevented. As a result, effect that convenience enhances is obtained.

Also, in the present embodiment, a user is made to input a plurality of biometric data in enrollment, and these may be judged as high quality templates when the sum of KL distances determined for them exceeds a threshold, whereas these may be judged as low quality templates when it falls below.

Further, in the present embodiment, a user may be made to input the same biometric data several times in enrollment, the genuine distribution "$f_u$" unique to the user may be estimated based on them, and the KL distance $D(f_u\|g_t)$ between $f_u$ and a template-specific impostor distribution $g_t$ may be compared with a threshold T. Because a distance between a genuine distribution and an impostor distribution becomes small when the template is a "Goat" similar to the case of a "Lamb", there is a tendency for it to be judged as a low-quality template. In this way, registration of a "Goat" can be prevented by detecting a "Goat" and making it re-enrolled in enrollment. As a result, effect that convenience enhances is obtained.

Moreover, in the present embodiment, a score $s_{th}$ may be determined before enrollment such that probability that a score (a degree of similarity, here) in the genuine distribution is $s_{th}$ or greater is δ as shown in Figs. 6A and 6B, and it may be judged as a high-quality template when the log-likelihood ratio log $\{f(s_{th})/g_t(s_{th})\}$ is A or greater in enrollment, whereas it may be judged as a low-quality template when it falls below. Because the probability that the log-likelihood ratio log$\{f(s_{th})/g_t(s_{th})\}$ falls below A is the FRR when a user inputs biometric data only once (that is, when $J_{max} = 1$), the FRR of $J_{max} = 1$ can be suppressed to δ in this way. Accordingly, the problem that a "Lamb" becomes a "Goat" can be prevented. As a result, an effect that convenience enhances is obtained.

Also in the case where $J_{max}$ is two or greater, the FRR may be determined by a numerical calculation similarly and a threshold for template quality may be set so that it becomes δ.

Further, in the present embodiment, biometric data may be input in the order of greater KL distances in authentication. By inputting in the order of greater expected values of the log-likelihood ratios in this way, it becomes possible to finish authentication by a genuine in times of input as less as possible. As a result, an effect that convenience enhances is obtained.

The present embodiment is applicable to arbitrary applications which perform user authentication based on biometric data. For example, it is applicable to information access control in a corporate network, identity verification in an internet banking system or an ATM, log-in to a Web site for members, individual authentication in admission to a protected area, log-in to a PC, or the like.

It should be further understood by those skilled in the art that although the foregoing description has been made on embodiments of the invention, the invention is not limited thereto and various changes and modifications may be made without departing from the spirit of the invention and the scope of the appended claims.

**Claims**

1.  A biometric authentication system, comprising:

    a biometric data input sensor (101, 301) which acquires biometric data from users;
    a template generation unit (102) which generates a template (222) from the biometric data;
    a query sample generation unit (302) which generates a query sample from the biometric data;
    a matching unit (103) which matches the query sample and the template (222) with each other;
    a query sample-specific impostor distribution estimation unit (202) which estimates a query sample-specific impostor distribution to which a score of the query sample and the template (222) of an impostor follows;
    a template-specific impostor distribution estimation unit (104) which estimates a template-specific impostor distribution (223) to which a score of the template (222) and the query sample of an impostor follows; and
    a user judgment unit (205) which performs judgment of a user using one in which false accept is more difficult to occur between the query sample-specific impostor distribution and the template-specific impostor distribution (223).

2.  The biometric authentication system according to Claim 1, wherein the user judgment unit (205) compares a smaller of a log-likelihood ratio determined using the query sample-specific impostor distribution and a log-likelihood ratio determined using the template-specific impostor distribution (223) with a first threshold and a second threshold which are determined in advance, the second threshold being smaller than the first threshold, to judge as being genuine when it is greater than the first threshold; to judge as being an impostor when it is smaller than the second threshold; and to request re-input of the biometric data as being undeterminable when it is neither of them.

3.  The biometric authentication system according to Claim 2, further comprising:

    a template quality judgment unit (106) which judges quality of the template (222) in enrollment and
    a re-enrollment request unit (107) which requests re-enrollment of the template (222) when quality of the template (222) is lower than predetermined quality.

4.  The biometric authentication system according to Claim 3, wherein the template quality judgment unit (106) judges quality of the template (222) by comparing at least one of respective KL distances (224) between the genuine distribution (120) to which a score of a genuine follows and a plurality of the template-specific impostor distributions (223) and sums of the respective KL distances (224) with a predetermined threshold.

5.  The biometric authentication system according to Claim 4, wherein the genuine distribution (120) uses user-specific information which is different for every one of the users.

6.  The biometric authentication system according to Claim 3, wherein the template quality judgment unit (106) judges quality of the template (222) by whether an FRR becomes a certain value or less, or not.

7.  The biometric authentication system according to Claim 6, wherein the biometric data input sensor (301) requests input starting biometric data of greater KL distances (224) between the genuine distribution (120) to which a score of a genuine follows and the template-specific impostor distribution (223).

# FIG. 1

**ENROLLMENT TERMINAL** — 100

- 101 — BIOMETRIC DATA INPUT SENSOR
- 102 — TEMPLATE GENERATION UNIT
- 103 — MATCHING UNIT
- 104 — TEMPLATE-SPECIFIC IMPOSTOR DISTRIBUTION ESTIMATION UNIT
- 105 — KL DISTANCE CALCULATION UNIT
- 106 — TEMPLATE QUALITY JUDGMENT UNIT
- 107 — RE-ENROLLMENT REQUEST UNIT
- 108 — COMMUNICATION I/F

**DATABASE** — 109

- 110 — DUMMY QUERY SAMPLE
- 120 — GENUINE DISTRIBUTION

**CLIENT TERMINAL** — 300

- 301 — BIOMETRIC DATA INPUT SENSOR
- 302 — QUERY SAMPLE GENERATION UNIT
- 303 — COMMUNICATION I/F

400

**SERVER TERMINAL** — 200

- 201 — MATCHING UNIT
- 202 — QUERY SAMPLE-SPECIFIC IMPOSTOR DISTRIBUTION ESTIMATION UNIT
- 203 — QUERY SAMPLE LOG-LIKELIHOOD RATIO CALCULATION UNIT
- 204 — TEMPLATE LOG-LIKELIHOOD RATIO CALCULATION UNIT
- 205 — USER JUDGMENT UNIT
- 209 — COMMUNICATION I/F

**DATABASE** — 210

**ENROLLMENT INFORMATION** — 220

- 221 — USER ID
- 222 — TEMPLATE
- 223 — TEMPLATE-SPECIFIC IMPOSTOR DISTRIBUTION
- 224 — KL DISTANCE

240 — DUMMY TEMPLATE

250 — GENUINE DISTRIBUTION

EP 2 605 182 A2

# FIG. 2

| 500 | 501 | 502 |
|:---:|:---:|:---:|
| CPU | MEMORY | HDD |

| INPUT DEVICE | OUTPUT DEVICE | COMMUNICATION DEVICE |
|:---:|:---:|:---:|
| 503 | 504 | 505 |

# FIG. 3

ENROLLMENT TERMINAL ～ 100

INPUT A USER ID → ACQUIRE A USER ID ～ S101

INPUT BIOMETRIC DATA → ACQUIRE BIOMETRIC DATA ～ S102

GENERATE TEMPLATE ～ S103

S104 ～ MATCH TEMPLATE WITH DUMMY QUERY SAMPLE ← DUMMY QUERY SAMPLE

S105 ～ ESTIMATE TEMPLATE-SPECIFIC IMPOSTOR DISTRIBUTION

S106 ～ CALCULATE KL DISTANCE ← GENUINE DISTRIBUTION

S107 ～ JUDGE TEMPLATE QUALITY

S108 ～ Sheep? — No → RETURN TO S102 ～ S109

Yes

S110 ～ TRANSMIT ENROLLMENT INFORMATION → ENROLLMENT INFORMATION

109 ～ DATABASE

SERVER TERMINAL ～ 200

210 ～ DATABASE

S111 ～ STORE ENROLLMENT INFORMATION → ENROLLMENT INFORMATION

EP 2 605 182 A2

# FIG. 4

CLIENT TERMINAL ～300

SERVER TERMINAL ～200

210～ DATABASE

(INPUT A USER ID) → ACQUIRE A USER ID ～ S201

USER ID QUERY SAMPLE

(INPUT BIOMETRIC DATA) → ACQUIRE BIOMETRIC DATA ～ S202

GENERATE QUERY SAMPLE ～ S203

TRANSMIT USER ID AND QUERY SAMPLE ～ S204

MATCH QUERY SAMPLE WITH DUMMY TEMPLATE ～ S205  DUMMY TEMPLATE

ESTIMATE QUERY SAMPLE-SPECIFIC IMPOSTOR DISTRIBUTION ～ S206

MATCH QUERY SAMPLE WITH TEMPLATE ～ S207  TEMPLATE

CALCULATE QUERY SAMPLE LOG-LIKELIHOOD RATIO ～ S208  GENUINE DISTRIBUTION

CALCULATE TEMPLATE LOG-LIKELIHOOD RATIO ～ S209  TEMPLATE-SPECIFIC IMPOSTOR DISTRIBUTION

JUDGE USER ～ S210

TRANSMIT USER JUDGMENT RESULT ～ S211

USER JUDGMENT RESULT

USER JUDGMENT RESULT ～ S212

GENUINE        UNDETERMINABLE

IMPOSTOR        NUMBER OF TIMES OF INPUT $J = J_{max}$? ～ S213

No

AUTHENTICATION SUCCEEDED    AUTHENTICATION FAILED

Yes

AUTHENTICATION FAILED        RETURN TO S202 ～ S214

EP 2 605 182 A2

# FIG. 5

QUERY SAMPLE

$S_{J0}$ $S_{J1}$ $\cdots$ $S_{JM_2}$

0 1 $\cdots$ $M_2$

TEMPLATE    DUMMY TEMPLATE

PROBABILITY DENSITY

$g_q(s)$    $g_t(s)$    $f(s)$

$S_{J1} \cdots S_{JM_2}$    $S_{J0}$    SCORE

$L_{min}$

A    0    B

AUTHENTICATION SUCCEEDED

AUTHENTICATION FAILED

1    2    3

NUMBER OF TIMES OF INPUT

(T=3)

# FIG. 6A

$S_1$    $S_{M_1}$

0    1    $\cdots$    $M_1$

TEMPLATE    DUMMY QUERY SAMPLE

PROBABILITY DENSITY

$g_t(s)$    $f(s)$

$D(f \parallel g_t) \geqq T$

$\delta$

$S_1 \cdots S_{M_1}$    $S_{th}$    SCORE

HIGH QUALITY

# FIG. 6B

$S_2$    $S_N$

0    1    $\cdots$    $M_1$

PROBABILITY DENSITY

$g_t(s)$    $f(s)$

$D(f \parallel g_t) < T$

$\delta$

$S_1 \cdots S_{M_1} S_{th}$    SCORE

LOW QUALITY

EP 2 605 182 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. MONDEN.** Secure Biometric Authentication against ''Wolf Attack'' based on Accidental Coincidence Probability. *Symposium on Cryptography and Information Security,* 2010
- **Q. WANG ; S. KULKARNI ; S. VERDU.** Divergence estimation for multidimensional densities via k-nearest-neighbor distances. *IEEE International Symposium on Information Theory,* 2009, vol. 55
- **K. TAKAHASHI ; M. MIMURA ; Y ISOBE ; Y SETO.** A Secure and User-Friendly Multi-Modal Biometric System. *Proc. SPIE,* 2004, vol. 5404, 12-19
- Sequential Analysis. **A. WALD.** Sequential Analysis. John Wiley and Sons, 1947